# EUROPÄISCHE PATENTANMELDUNG

(11) **EP 3 127 599 A1**
(43) Veröffentlichungstag der Anmeldung: **08.02.2017**
(21) Anmeldenummer: 16179160.3
(22) Anmeldetag: 13.07.2016
(51) Int. Cl.: B01D 67/00, B01D 69/12, B01D 71/56

(54) **MEMBRANEN UND VERFAHREN ZU IHRER HERSTELLUNG**

(30) Priorität: 05.08.2015 DE 102015214896
(71) Anmelder: Leibniz-Institut für Polymerforschung Dresden e.V., 01069 Dresden (DE)
(72) Erfinder: MEIER-HAACK, Jochen, 01259 Dresden (DE); LANGNER, Christian, 04420 Makranstädt (DE)
(74) Vertreter: Rauschenbach, Marion

(57) **Zusammenfassung**

Die Erfindung bezieht sich auf das Gebiet der Polymerchemie und betrifft Membranen, wie sie beispielsweise als Membranen für die Aufbereitung von wässrigen Lösungen durch Umkehrosmose oder durch Mikro-, Ultra- oder Nanofiltration, eingesetzt werden.

Die Aufgabe der vorliegenden Erfindung besteht in der Angabe von Membranen, die eine verringerte Foulingneigung bei gleichbleibend guten oder verbesserten Filtrationseigenschaften zeigen, und in der Angabe eines einfachen und kostengünstigen Verfahrens zu deren Herstellung.

Gelöst wird die Aufgabe durch Membranen, bestehend aus einer Trägerschicht, auf der eine poröse Stützschicht, darauf eine trennaktive Schicht und darauf wiederum eine Deckschicht angeordnet sind, wobei das Material der trennaktiven Schicht funktionelle Gruppen aufweist, die in überwiegendem Maße Kohlenstoff-Kohlenstoff-Dreifachbindungen und/oder Kohlenstoff-Stickstoff-Dreifachbindungen aufweisen, und wobei das Material der Deckschicht funktionelle Gruppen aufweist, die in überwiegendem Maße mindestens Azid-Gruppen sind, und die funktionellen Gruppen mit mindestens Kohlenstoff-Kohlenstoff-Dreifachbindungen und/oder Kohlenstoff-Stickstoff-Dreifachbindungen mit den Azid-Gruppen chemisch kovalent gekoppelt sind.

## Beschreibung

Die Erfindung bezieht sich auf das Gebiet der Polymerchemie und betrifft Membranen, wie sie beispielsweise als Membranen für die Aufbereitung von wässrigen Lösungen durch Umkehrosmose oder durch Mikro-, Ultra- oder Nanofiltration, beispielsweise als Low-Fouling-Membranen, eingesetzt werden, und ein Verfahren zu ihrer Herstellung.

Das Fouling stellt trotz weltweiter Forschungsaktivitäten immer noch ein großes Problem bei der Membranfiltration dar. Neben Vorreinigung des Feeds, der Konstruktion, den Betriebsbedingungen und Reinigung der Membranen sind die Eigenschaften der Membranoberfläche selbst ein wesentlicher Aspekt für die Foulingneigung von Membranen (G.M. Giese,: J. Polym. Sci. Part B, Polym. Phys. 48 (2010) 1685).

Es sind zahlreiche Ansätze zur Minderung des Membranfoulings durch Modifizierung der Membranoberfläche bekannt. Zumeist wird die Hydrophilierung der Membranoberfläche angestrebt.

D. Rana und T. Matsuura: Chem. Rev. 110 (2010) 2448 geben eine Übersicht zu unterschiedlichen Verfahren zur Oberflächenmodifizierung, die zur Verringerung des Foulings von Membranen führen sollen.

Gemäß S. Azari und L. Zou: J. Membr. Sci. 401-402 (2012) 68 sind Nanofiltrationsmembranen bekannt, die durch Beschichtung mit 3-(3,4-Dihydroxyphenyl)-L-Alanin (I-DOPA) ein vermindertes Fouling bei der Filtration von Protein- und Tensidlösungen aufweisen.

Kramer et al: Colloids and Surfaces A: 137 (1998) 45 berichten, dass Polyelektrolytkomplexe bei Vorliegen hoher Ionenstärken nicht stabil sind, so dass diese für die Modifizierung von Umkehrosmosemembranen ungeeignet sind.

Aus J. Meier-Haack und M. Müller: Macromol. Symp. 188 (2002) 91 ist die Modifizierung von Membranoberflächen mit Polyelektrolyten und Polyelektrolytkomplexen bekannt.

Q. An et al: J. Membr. Sci. 367 (2011)158 gibt die Modifizierung von Thin Film Composite Polyamide (TFC PA)-Nanofiltrationsmembranen durch Einpolymerisieren von Polyvinylalkohol in der Polyamidschicht bekannt.

Gemäß Z. Yong et al: J. Membr. Sci. 270 (2006) 162 sind TFC PA-Umkehrosmosemembranen bekannt, die sulfonierte Monomereinheiten in der Polyamidschicht enthalten.

Nach Y.-C. Chiang et al: J. Membr. 389 (2012) 76 ist eine TFC PA-Nanofiltrationsmembran bekannt, die durch chemische Modifizierung mit 1.)Iodpropansäure und 2.) Methyliodid eine Zwitterionische Oberfläche erhalten hat.

Aus V. Feger et al: J. Membr. Sci. 209 (2002) 283 sind TFE PA-Umkehrosmosemembranen bekannt, die mittels Redox initiierter Pfropfung von Acrylsäure modifiziert sind.

Q. Cheng et al: J. Membr. Sci. 447 (2013) 236 berichten über die Oberflächenmodifizierung von TFC PA-Umkehrosmosemembranen durch radikalische Pfropfung von N-Isopropylacrylamid und Acrylsäure.

G. Kang et al: Desalination 275 (2011) 252-259 beschreiben ein Verfahren, mit dem Amin-terminierte Polyethylenglykole (Jeffamine®) mittels Carbodiimid auf die Oberfläche von kommerziellen Umkehrosmose(RO)-Membranen gepfropft werden. Für die Ankopplung der Amin-terminierten Polyethylenglykole werden überschüssige, an der Oberfläche befindliche, Carbonsäuregruppen genutzt. Die Membranen zeigen ein verbessertes Foulingverhalten bei der Filtration von Milch oder von kationischen Tensiden. Die Pfropfreaktion läuft jedoch für industrielle Anwendungen zu langsam ab.

Ebenso ist die Carbodiimid-katalysierte Pfropfung von Imidazolidinylharnstoff auf TFC PA-Umkehrosmosemembranen zur Verbesserung der Chlorstabilität und Verringerung der Foulingneigung aus J. Xu et al: J. Membr. Sci. 435 (2013) 80 bekannt.

Die Nutzung überschüssiger Säurechloridgruppen nach der Grenzflächenpolymerisation zur Herstellung von TFC PA-Membranen zur Oberflächenmodifizierung ist aus Kang et al: Polymer 48 (2007) 1165; D. Nikolaeva et al: J. Membr. Sci. 476 (2015) 264; L. Zou et al: Sep. Pur. Technol. 72 (2010) 256 bekannt.

Aus der US 8505743 B2 ist ein Verfahren bekannt, bei dem zunächst die Beschichtung einer RO-Membran mit Polyamidamin (PAMAM)-Dendrimeren, die gegebenenfalls Silbernanopartikel enthalten, durchgeführt wird, auf die in einem nachfolgenden Schritt Polyethylenglycole (PEG) gepfropft werden. Die Anknüpfung der PEGs erfolgt über die Aminogruppen der PAMAM-Schicht durch Verwendung von N-PEG-Succinimid oder PEG-Glycidol. Die Beschichtung wird nicht auf der Membranoberfläche fixiert.

Gemäß der US 2013/0102740 A1 sind Ethinylgruppen enthaltende Polymermaterialien für lonenaustauschermembranen bekannt. Die Ethinylgruppen werden zu thermisch initiierten Vernetzungsreaktionen genutzt.

Auch aus Kim et al: J. Membr. Sci. 378 (2011) 512 sind Ethinylgruppen-haltige lonenaustauschermembranen bekannt, wobei die Ethinylgruppen zur thermischen Vernetzung des Membranmaterials genutzt werden.

Gemäß Xie et al: J. Appl. Polym. Sci. 132 (2015) 41549 ist die Modifizierung von Polysulfon und daraus hergestellten Ultrafiltrationsmembranen mit Propargylalkohol mittels Kupfer-katalysierter 1,3 dipolarer Cycloaddition bekannt. Das Polymer wird zunächst chlormethyliert und dann eine Azidfunktionalität durch Umsetzung mit Natriumazid eingeführt. Die Azidgruppe wird zur Anbindung von Propargylalkohol mittels 1,3 dipolarer Cycloaddition genutzt. Damit wird das gesamte Polymermaterial vor der Membranherstellung mit hydrophilen Gruppen (Hydroxygruppen) funktionalisiert.

Nach Dimitrov et al: J. Membr. Sci. 450 (2014) 362 und Macromol. Rapid Commun. 33 (2012) 1368 ist die Funktionalisierung von Polysulfon mit phosphoniertem Poly(pentafluorstyrol) bekannt. Die Azidgruppe wird durch Lithiierung des Polysulfons und Umsetzung mit Chlormethylbenzoylchlorid und anschließender Austauschreaktion mit Natriumazid an der Chlormethylgruppe erhalten. Die Pfropfung von Poly(pentafluorstyrol) erfolgt durch eine Kupfer-katalysierte 1,3 dipolare Cycloaddition mit Ethinyl-terminiertem Poly(pentafluorstyrol).

Aimi et al: Polymer Preprints 49 (2008) 343 beschreiben die Synthese von Poly(vinylacetylen)-Blockcopolymeren als Precursor für strukturierte Nanokohlenstoffmaterialien.

Nachteilig bei den bekannten Lösungen ist, dass die Membranen immer noch eine zu hohe Foulingneigung zeigen und/oder die Filtrationseigenschaften, wie Permeabilität und Rückhalt, im Vergleich zu unmodifizierten Membranen verschlechtert sind.

Die Aufgabe der vorliegenden Erfindung besteht in der Angabe von Membranen, die eine verringerte Foulingneigung bei gleichbleibend guten oder verbesserten Filtrationseigenschaften zeigen, und in der Angabe eines einfachen und kostengünstigen Verfahrens zu deren Herstellung.

Die Aufgabe wird durch die in den Ansprüchen angegebene Erfindung gelöst. Vorteilhafte Ausgestaltungen sind Gegenstand der Unteransprüche.

Die erfindungsgemäßen Membranen bestehen aus mindestens einer Trägerschicht, auf der eine poröse Stützschicht, darauf mindestens eine trennaktive Schicht und darauf wiederum mindestens eine Deckschicht angeordnet sind, wobei die trennaktive Schicht aus mittels Grenzflächenpolymerisation aufgebrachten Polymeren oder aus dem Material der porösen Stützschicht besteht und integraler Bestandteil der porösen Stützschicht ist, und wobei das Material der trennaktiven Schicht funktionelle Gruppen aufweist, die in überwiegendem Maße Kohlenstoff-Kohlenstoff-Dreifachbindungen und/oder Kohlenstoff-Stickstoff-Dreifachbindungen aufweisen, und wobei das Material der Deckschicht funktionelle Gruppen aufweist, die in überwiegendem Maße mindestens Azid-Gruppen sind, und im Kontaktbereich von trennaktiver Schicht und Deckschicht die funktionellen Gruppen mit mindestens Kohlenstoff-Kohlenstoff-Dreifachbindungen und/oder Kohlenstoff-Stickstoff-Dreifachbindungen des Materials der trennaktiven Schicht mit den Azid-Gruppen des Materials der Deckschicht chemisch kovalent gekoppelt sind.

Vorteilhafterweise ist die Trägerschicht ein textiles Flächengebilde, vorteilhafterweise ein Vlies.

Ebenfalls vorteilhafterweise ist das Material der porösen Stützschicht und/oder der trennaktiven Schicht Polysulfon oder Polyethersulfon oder Polyacrylnitril oder Polyvinylidenfluorid oder Polyester.

Weiterhin vorteilhafterweise besteht das Material der trennaktiven Schicht aus mittels Grenzflächenpolymerisation aufgebrachten Polymeren, wie vorteilhafterweise Polyamid, Polyester, Polyurethan, Polysulfonamid und/oder Polyharnstoff.

Und auch vorteilhafterweise ist die Deckschicht aus einem hydrophilen multifunktionellen Material besteht, welche wasserlöslich und/oder alkohollöslich und/oder in einer Wasser-Alkohol-Mischung löslich und vorteilhafterweise hochverzweigt.

Vorteilhaft ist es auch, wenn die Deckschicht aus Polyethylenimin und/oder Polypropylen und/oder Poly(amidamin) und/oder Polyamin und/oder Polyetherol und/oder Polyol und/oder Polysaccarid und/oder Chitosan und/oder Polyalkyloxazolin besteht.

Weiterhin vorteilhaft ist es, wenn die Konzentration der funktionellen Gruppen des Materials der trennaktiven Schicht zwischen 1 und 10 % beträgt, wobei von diesen funktionellen Gruppen mindestens 75 bis 100 % funktionelle Gruppen mit mindestens Kohlenstoff-Kohlenstoff-Dreifachbindungen und/oder Kohlenstoff-Stickstoff-Dreifachbindungen sind, noch vorteilhafter ist es, wenn die Konzentration der funktionellen Gruppen mit mindestens Kohlenstoff-Kohlenstoff-Dreifachbindungen und/oder Kohlenstoff-Stickstoff-Dreifachbindungen im Material der trennaktiven Schicht 75 bis 100 % der funktionellen Gruppen beträgt.

Ebenfalls vorteilhaft ist es, wenn die funktionellen Gruppen mit mindestens Kohlenstoff-Kohlenstoff-Dreifachbindungen und/oder Kohlenstoff-Stickstoff-Dreifachbindungen Ethinyl- oder Nitrilgruppen sind.

Und auch vorteilhaft ist es, wenn jedes Molekül des die Deckschicht bildenden Materials mindestens eine Azidgruppe enthält.

Bei dem erfindungsgemäßen Verfahren zur Herstellung von Membranen wird auf eine Trägerschicht mindestens eine poröse Stützschicht aufgebracht, auf die nachfolgend mindestens eine trennaktive Schicht aufgebracht wird, die integraler Bestandteil der porösen Stützschicht ist, und darauf wiederum unmittelbar nachfolgend mindestens eine Deckschicht aufgebracht wird, wobei als Material der trennaktiven Schicht ein Material mit funktionellen Gruppen eingesetzt wird, oder funktionelle Gruppen in das Material der trennaktiven Schicht vor Aufbringen der Deckschicht einpolymerisiert werden, wobei die funktionellen Gruppen des Materials der trennaktiven Schicht in überwiegendem Maße Kohlenstoff-Kohlenstoff-Dreifachbindungen und/oder Kohlenstoff-Stickstoff-Dreifachbindungen aufweisen, und wobei das Material der Deckschicht funktionelle Gruppen aufweist, die in überwiegendem Maße mindestens Azid-Gruppen sind, und während und/oder nach dem Aufbringen der Deckschicht im Kontaktbereich von trennaktiver Schicht und Deckschicht die funktionellen Gruppen mit mindestens Kohlenstoff-Kohlenstoff-Dreifachbindungen und/oder Kohlenstoff-Stickstoff-Dreifachbindungen des Materials der trennaktiven Schicht mit den Azid-Gruppen des Materials der Deckschicht über eine 1,3-dipolare Cycloadditionsreaktion chemisch kovalent gekoppelt werden.

Vorteilhafterweise wird als Material der porösen Stützschicht und/oder der trennaktiven Schicht Polysulfon oder Polyethersulfon oder Polyacrylnitril oder Polyvinylidenfluorid oder Polyester eingesetzt.

Ebenfalls vorteilhafterweise wird die trennaktive Schicht mittels Grenzflächenpolymerisation hergestellt.

Weiterhin vorteilhafterweise werden die funktionellen Gruppen während der Herstellung des Materials der trennaktiven Schicht durch Verwendung funktioneller Gruppen enthaltender Monomere in das Material eingeführt.

Und auch vorteilhafterweise wird die Deckschicht, vorteilhafterweise unmittelbar nach der Grenzflächenpolymerisation der trennaktiven Schicht, in Form einer wässrigen Lösung und/oder einer alkoholischen Lösung und/oder einer Lösung in einer Wasser-Alkohol-Mischung der Materialien der Deckschicht durch ein Sprühverfahren oder durch ein Rakelverfahren oder durch ein Tauchverfahren auf die trennaktive Schicht aufgebracht.

Es ist auch vorteilhaft, wenn als Material der trennaktiven Schicht ein Material mit einer Konzentration der funktionellen Gruppen des zwischen 1 und 10 mol-% eingesetzt wird, wobei von diesen funktionellen Gruppen mindestens 75 bis 100 % funktionelle Gruppen mit mindestens Kohlenstoff-Kohlenstoff-Dreifachbindungen und/oder Kohlenstoff-Stickstoff-Dreifachbindungen sind, wobei noch vorteilhafterweise als Material der trennaktiven Schicht ein Material eingesetzt wird, bei dem die Konzentration der funktionellen Gruppen mit mindestens Kohlenstoff-Kohlenstoff-Dreifachbindungen und/oder Kohlenstoff-Stickstoff-Dreifachbindungen 75 bis 100 % der funktionellen Gruppen beträgt, und/oder wobei ebenfalls vorteilhafterweise als Material der trennaktiven Schicht ein Material mit funktionellen Gruppen mit mindestens Kohlenstoff-Kohlenstoff-Dreifachbindungen und/oder Kohlenstoff-Stickstoff-Dreifachbindungen eingesetzt wird, wobei die funktionellen Gruppen Ethinyl- oder Nitrilgruppen sind.

Vorteilhaft ist es auch, wenn als Material der Deckschicht eine wässrige Lösung und/oder eine alkoholische Lösung und/oder eine Lösung in einer Wasser-Alkohol-Mischung des Deckschichtmaterials eingesetzt wird, bei denen jedes Molekül des die Deckschicht bildenden Materials mindestens eine Azidgruppe enthält.

Ebenfalls vorteilhaft ist es, wenn die chemisch kovalente Kopplung der funktionellen Gruppen mit mindestens Kohlenstoff-Kohlenstoff-Dreifachbindungen und/oder Kohlenstoff-Stickstoff-Dreifachbindungen des Materials der trennaktiven Schicht mit den Azid-Gruppen des Materials der Deckschicht über eine mittels Kupfer katalysierte 1,3-dipolare Cycloadditionsreaktion realisiert wird.

Weiterhin vorteilhaft ist es, wenn mit dem Material der Deckschicht ein Katalysator, vorteilhafterweise ein Kupfer(I)salz, auf die trennaktive Schicht aufgebracht wird.

Die erfindungsgemäße Verwendung der erfindungsgemäßen Membranen, die erfindungsgemäß hergestellt worden sind, erfolgt für die Aufbereitung wässriger Lösungen durch Umkehrosmose oder Mikro- oder Nano- oder Ultrafiltration.

Mit der erfindungsgemäßen Lösung ist es erstmals möglich, von Membranen, die eine verringerte Foulingneigung bei gleichbleibend guten oder verbesserten Filtrationseigenschaften zeigen, und ein einfaches und kostengünstiges Verfahren zu deren Herstellung anzugeben.

Erreicht wird dies durch Membranen, die grundsätzlich aus einer Trägerschicht, einer porösen Stützschicht, einer trennaktiven Schicht und einer Deckschicht bestehen, die im Wesentlichen in der Reihenfolge übereinander angeordnet sind. Dabei ist erfindungswesentlich, dass die Deckschicht chemisch kovalent an die trennaktive Schicht gekoppelt ist. Diese Kopplung erfolgt über funktionelle Gruppen des Materials der trennaktiven Schicht, die in überwiegendem Maße Kohlenstoff-Kohlenstoff-Dreifachbindungen und/oder Kohlenstoff-Stickstoff-Dreifachbindungen aufweisen, und über funktionelle Gruppen des Materials der Deckschicht, die in überwiegendem Maße mindestens Azid-Gruppen sind. Diese funktionellen Gruppen koppeln über eine 1,3-dipolare Cycloadditionsreaktion.

Die Trägerschicht ist vorteilhafterweise ein textiles Flächengebilde, wie ein Vlies, auf die eine poröse Stützschicht mittels Sprühen oder durch Rakeln oder durch Tauchen aufgebracht werden kann. Die poröse Stützschicht kann dabei aus Polysulfon oder Polyethersulfon oder Polyacrylnitril oder Polyvinylidenfluorid oder Polyester bestehen.

Die auf der porösen Stützschicht befindliche trennaktive Schicht kann bei Ultrafiltrationsmembranen und gegebenenfalls auch bei Mikrofiltrationsmembranen aus dem gleichen Material wie die poröse Stützschicht bestehen und integraler Bestandteil der porösen Stützschicht sein, oder sie kann vorteilhafterweise mittels Grenzflächenpolymerisation auf der porösen Stützschicht hergestellt werden. In diesem Fall kann die trennaktive Schicht aus Polyamid, Polyester, Polysulfonamid Polyurethan und/oder Polyharnstoff bestehen.
Erfindungsgemäß ist gefordert, dass das Material der trennaktiven Schicht funktionelle Gruppen enthält, die in überwiegendem Maße Kohlenstoff-Kohlenstoff-Dreifachbindungen und/oder Kohlenstoff-Stickstoff-Dreifachbindungen aufweisen müssen. Die funktionellen Gruppen der trennaktiven Schicht werden während der Herstellung des Materials der trennaktiven Schicht durch die Verwendung funktioneller Gruppen enthaltender Monomere in das Material eingeführt. Als funktionelle Gruppen enthaltende Monomere können beispielsweise Ethinylhydrochinon, Ethinylresorcin, Propargylhydrochinon, Propargylresorcin, 2,4-Diaminophenylethin, 2,5-Diaminophenylethin, 3,5-Diaminopheylethin, Dimercaptophenylethin, Ethinylanilin, 2,6-Difluorbenzonitril, 2,4-Difluorbenzonitril, Acrylnitril, Vinylacetylen eingesetzt werden.

Dabei sind die funktionellen Gruppen in der trennaktiven Schicht vorteilhafterweise in einer Konzentration zwischen 1 und 10 mol-%, bei Verwendung von beispielsweise Polyacrylnitril als Material für die poröse Stützschicht und die trennaktive Schicht in einer Konzentration bis 100 %, vorhanden, wobei von diesen funktionellen Gruppen mindestens 75 bis 100 % funktionelle Gruppen mit mindestens Kohlenstoff-Kohlenstoff-Dreifachbindungen und/oder Kohlenstoff-Stickstoff-Dreifachbindungen sind. Solche erfindungsgemäß notwendigen funktionellen Gruppen der trennaktiven Schicht sind vorteilhafterweise Ethinyl- oder Nitrilgruppen.

Nach der Herstellung der funktionelle Gruppen enthaltenden trennaktiven Schicht, bei der die funktionellen Gruppen in überwiegendem Maße Kohlenstoff-Kohlenstoff-Dreifachbindungen und/oder Kohlenstoff-Stickstoff-Dreifachbindungen sind, kann die Deckschicht aufgebracht werden.

Die Deckschicht besteht dabei vorteilhafterweise aus einem hydrophilen multifunktionellen Material, welches wasserlöslich und/oder alkohollöslich und/oder in einer Wasser-Alkohol-Mischung löslich und vorteilhafterweise hochverzweigt ist, wie beispielsweise Polyethylenimin und/oder Polypropylen und/oder Poly(amidamin) und/oder Polyamin und/oder Polyetherol und/oder Polyol und/oder Polysaccharid und/oder Chitosan und/oder Polyalkyloxazolin. Dieses Material der Deckschicht kann vorteilhafterweise durch ein Sprühverfahren oder durch ein Rakelverfahren oder durch ein Tauchverfahren auf die trennaktive Schicht aufgebracht werden. Erfindungsgemäß ist auch hier gefordert, dass das Material der Deckschicht funktionelle Gruppen aufweist, wobei jedes Molekül des die Deckschicht bildenden Materials mindestens eine Azidgruppe enthält.

Erfindungsgemäß erfolgt während und/oder nach dem Aufbringen der Deckschicht im Kontaktbereich von trennaktiver Schicht und Deckschicht die chemisch kovalente Kopplung der funktionellen Gruppen mit mindestens Kohlenstoff-Kohlenstoff-Dreifachbindungen und/oder Kohlenstoff-Stickstoff-Dreifachbindungen des Materials der trennaktiven Schicht mit den Azid-Gruppen des Materials der Deckschicht über eine 1,3-dipolare Cycloadditionsreaktion.
Diese 1,3-dipolare Cycloadditionsreaktion ist vorteilhafterweise eine katalysierte 1,3-dipolare Cycloadditionsreaktion, noch vorteilhafterweise eine über Kupfer katalysierte 1,3-dipolare Cycloadditionsreaktion. Für eine katalysierte 1,3-dipolare Cycloadditionsreaktion kann beispielsweise Kupfer(I)salz als Katalysator mit dem Material der Deckschicht auf die trennaktive Schicht aufgebracht werden.
Durch diese Ankopplung können die linearen und/oder hochverzweigten hydrophilen multifunktionellen Polymere der Deckschicht sicher und langzeitstabil mit den Polymeren der trennaktiven Schicht verbunden werden.

Durch die erfindungsgemäße Lösung werden erstmals funktionelle Gruppen mit Kohlenstoff-Kohlenstoff-Dreifachbindungen oder Kohlenstoff-Stickstoff-Dreifachbindungen, wie beispielsweise Ethinyl- oder Nitrilgruppen, zur Ankopplung an Azidgruppen über eine 1,3-dipolare Cycloadditionsreaktion eingesetzt, um eine Deckschicht chemisch kovalent an eine trennaktive Schicht von Membranen zu koppeln.

Zum Stand der Technik unterscheidet sich die erfindungsgemäße Lösung insbesondere dadurch, dass in jedem Fall funktionelle Gruppen mit Kohlenstoff-Kohlenstoff-Dreifachbindungen oder Kohlenstoff-Stickstoff-Dreifachbindungen, wie beispielsweise Ethinyl- oder Nitrilgruppen, in dem Material der trennaktiven Schicht vorhanden sind. Die Kopplung mit Azidgruppen des die Deckschicht bildenden Materials erfolgt erst, nachdem die trennaktive Schicht ausgebildet worden ist und wenn diese durch das Material der Deckschicht in den Kontaktbereich zwischen trennaktiver Schicht und Deckschicht gebracht werden. Ebenso findet, im Unterschied zu Lösungen des Standes der Technik, diese Kopplung nur in dem Kontaktbereich zwischen trennaktiver Schicht und Deckschicht statt. Die weiter im jeweiligen Material der trennaktiven Schicht und der Deckschicht vorhandenen funktionellen Gruppen gehen keine Kopplung miteinander ein und mindestens die ungekoppelten funktionellen Gruppen der Deckschicht stehen anderen funktionellen Gruppen zur Kopplung zur Verfügung.
Eine solche Art der Kopplung zwischen Schichten ist für Membranen bisher nicht bekannt.
Durch die erfindungsgemäße Kopplung können als weiterer Vorteil der erfindungsgemäßen Lösung auch wasserlösliche Polymere als Deckschichtmaterialien eingesetzt werden.

Insbesondere sind die erfindungsgemäßen und erfindungsgemäß hergestellten Membranen für die Aufbereitung wässriger Lösungen durch Umkehrosmose oder Mikro- oder Nano- oder Ultrafiltration einsetzbar.

Die erfindungsgemäßen Membranen weisen eine deutlich erhöhte Hydrophilie auf und zeigen dadurch eine im Wesentlichen deutlich verringerte Foulingneigung, ohne dass die Filtrationseigenschaften, wie Permeabilität und Rückhalt im Vergleich zu unmodifizierten Membranen, negativ beeinflusst werden.

Nachfolgend wird die Erfindung an mehreren Ausführungsbeispielen näher erläutert.

### Vergleichsbeispiel 1

### Herstellung einer RO-Membran ohne Deckschicht (MEM-1)

Eine Ultrafiltrationsmembran (UF-Membran), bestehend aus einem Vlies als Trägerschicht und einem darauf befindlichen Polyethersulfon als poröse Stützschicht wird mit einer Lösung von 20 g/l m-Phenylendiamin in Wasser getränkt. Die überschüssige Lösung wird mit einer Walze von der Oberfläche entfernt. Danach wird die getränkte UF-Membran mit einer Lösung von 1 g/l Trimesoylchlorid (TMC) in einem Hexan/Tetrahydrofuran (THF)-Gemisch mit 0,5 % THF zur Herstellung der trennaktiven Schicht beschichtet. Nach einer Zeit von 180 s wird die überschüssige Lösung entfernt und die Rohmembran bei Raumtemperatur 30 s und bei einer Temperatur von 80 °C 120 s getrocknet. Die so hergestellte Umkehrosmose-(RO-)Membran wird zuerst mit voll entsalztem (VE) Wasser 2 h, dann 20 h mit 1mM Salzsäure (pH = 3) und dann 2 h wieder mit VE Wasser gewaschen.

### Beispiel 2

### Herstellung einer RO-Membran mit gekoppelter Deckschicht (MEM-2)

Eine Ultrafiltrationsmembran (UF-Membran) bestehend aus einem Vlies als Trägerschicht und einem darauf befindlichen Polyethersulfon als poröse Stützschicht wird mit einer Lösung von 20 g/l m-Phenylendiamin und Ethinylanilin in Wasser/Acetonitril (3:1 Ma./Ma.) getränkt. Die überschüssige Lösung wird abgegossen und mit einer Walze von der Oberfläche entfernt. Danach wird die getränkte UF-Membran zur Herstellung der trennaktiven Schicht mit einer Lösung von 1 g/l TMC in einem Hexan/THF-Gemisch mit 0,5 % THF beschichtet. Nach einer Zeit von 180 s wird die überschüssige Lösung entfernt und die Rohmembran bei Raumtemperatur 30 s und bei einer Temperatur von 80 °C 120 s getrocknet. Die so hergestellte RO-Membran wird zuerst mit VE Wasser 2 h, dann 20 h mit 1mM Salzsäure (pH = 3) und dann 2 h wieder mit VE Wasser gewaschen. Danach wird die RO-Membran zur Erzeugung der Deckschicht mit einer wässrigen Lösung aus 1 g/l Azid-terminiertem Polyethylenglykolmonoethylether beschichtet. Nach Aufbringen der wässrigen Lösung wird auf die Oberfläche als Katalysator 1 ml einer Lösung aus 0,8 g/l CuSO₄*5H₂O und 6,4 g/l Natriumascorbat gegeben. Nach 4 Stunden wird die überschüssige Lösung von der Membran abgegossen und wiederum mit VE Wasser 2 h, dann 20 h mit 1mM Salzsäure (pH = 3) und dann 2 h wieder mit VE Wasser gewaschen.

### Beispiel 3

### Herstellung einer RO-Membran mit gekoppelter Deckschicht (MEM-3)

Eine UF-Membran bestehend aus einem Vlies als Trägerschicht und einem darauf befindlichen Polyethersulfon als poröse Stützschicht wird mit einer Lösung von 20 g/l m-Phenylendiamin und Ethinylanilin in Wasser/Acetonitril (3:1 Ma./Ma.) getränkt. Die überschüssige Lösung wird abgegossen und mit einer Walze von der Oberfläche entfernt. Danach wird die getränkte UF-Membran zur Herstellung der trennaktiven Schicht an mit einer Lösung von 1 g/l TMC in einem Hexan/THF-Gemisch mit 0,5 % THF beschichtet. Nach einer Zeit von 180 s wird die überschüssige Lösung entfernt und die Rohmembran bei Raumtemperatur 30 s und bei einer Temperatur von 80 °C 120 s getrocknet. Die so hergestellte RO-Membran wird zuerst mit VE Wasser 2 h, dann 20 h mit 1mM Salzsäure (pH = 3) und dann 2 h wieder mit VE Wasser gewaschen. Danach wird die RO-Membran zur Erzeugung der Deckschicht mit einer wässrigen Lösung aus 1 g/l Azid-terminiertem Polymethyloxazolin beschichtet. Nach Aufbringen der wässrigen Lösung wird auf die Oberfläche als Katalysator 1 ml einer Lösung aus 0,8 g/l CuSO₄*5H₂O und 6,4 g/l Natriumascorbat gegeben. Nach 4 Stunden wird die überschüssige Lösung von der Membran abgegossen und wiederum mit VE Wasser 2 h, dann 20 h mit 1 mM Salzsäure (pH = 3) und dann 2 h wieder mit VE Wasser gewaschen.

### Vergleichsbeispiel 4

### Herstellung einer Ultrafiltrations(UF)-Membran ohne Deckschicht (MEM-4)

Ein Polyestervlies als wird auf einer Glasplatte als Trägerschicht fixiert und mit einer Mischung von 60 Vol.-% N-Methylpyrrolidon (NMP) und 40 Vol.-% Wasser getränkt. Nach 1 min wird die überschüssige Mischung mit einer Walze entfernt. Eine Lösung aus Polyethersulfon mit 10 mol-% Ethinylgruppen, was einer Konzentration von 200 g/l Ethinylgruppen in NMP entspricht, wird mit einer Dicke von 80 µm mit einem Rakel auf das getränkte Polyestervlies aufgebracht und anschließend in ein Wasserbad zum Ausfällen des Polymers überführt. Nach 30 min wird die Membran mit VE Wasser gewaschen und in VE Wasser bei 4 °C gelagert. Die trennaktive Schicht ist integraler Bestandteil der porösen Stützschicht.

### Beispiel 5

### Herstellung einer UF-Membran mit Deckschicht (MEM-5)

Ein Polyestervlies als wird auf einer Glasplatte als Trägerschicht fixiert und mit einer Mischung von 60 Vol.-% N-Methylpyrrolidon (NMP) und 40 Vol.-% Wasser getränkt. Nach 1 min wird die überschüssige Mischung mit einer Walze entfernt. Eine Lösung aus Polyethersulfon mit 10 mol-% Ethinylgruppen, was einer Konzentration von 200 g/l Ethinylgruppen in NMP entspricht, wird mit einer Dicke von 80 µm mit einem Rakel auf das getränkte Polyestervlies aufgebracht und anschließend in ein Wasserbad zum Ausfällen des Polymers überführt. Nach 30 min wird die Membran mit VE Wasser gewaschen. Die trennaktive Schicht ist integraler Bestandteil der porösen Stützschicht. Die Membran wird dann in einen Rahmen gespannt und zur Herstellung der Deckschicht mit einer wässrigen Lösung aus 1 g/l Azid-terminiertem Polyethylenglykolmonomethylether beschichtet. Nach Aufbringen der wässrigen Lösung wird auf die Oberfläche als Katalysator 1 ml einer Lösung aus 0,8 g/l CuSO₄*5H₂O und 6,4 g/l Natriumascorbat gegeben. Nach 4 Stunden wird die überschüssige Lösung von der Membran abgegossen und mit VE Wasser 2 h gewaschen.

### Testung der RO-Membranen MEM-1 bis MEM-3

Zur Überprüfung der Leistungsfähigkeit der Membranen wurden diese mit einer wässrigen Lösung von 3,5 g/l Natriumchlorid bei einem Druck von 5 MPa und einer Überströmgeschwindigkeit von 90 kg/h getestet. Dazu wurden die Permeabilität und der Salzrückhalt ermittelt.

Zur Bestimmung der Foulingneigung der Membranen wurde der Wasserfluss vor und nach der Filtration einer Proteinlösung mit 1 g/l Rinderserumalbumin (BSA) bei pH 7 gemessen. Die Membranen wurden vor dem Beginn der Filtration für 16 h bei einem Druck von 5 MPa konditioniert.

Die Ergebnisse sind in Tabelle 1 angeführt.

**Tabelle 1**

| Membran | Permeabilität (I/m²hbar) | Salzrückhalt (%) | Permeabilität nach Proteinfouling (%) |
|---|---|---|---|
| MEM-1 | 0,71 | 98,2 | 90 |
| MEM-2 | 0,85 | 98,0 | 99 |
| MEM-3 | 0,88 | 98,5 | 99 |

### Testung der UF-Membranen MEM-4 und MEM-5

Zur Überprüfung der Leistungsfähigkeit der Membranen wurden diese mit VE Wasser zur Bestimmung der Permeabilität und mit wässrigen Lösungen von 1 g/l Polyethylenglykol mit Molekulargewichten zwischen 1000 und 100000 g/mol zur Bestimmung der Trenngrenze (MWCO) (90% Rückhalt von PEG 50000 g/mol) bei einem Druck von 0,3 MPa getestet.

Zur Bestimmung der Foulingneigung der Membranen wurde der Wasserfluss vor und nach der Filtration einer Proteinlösung mit 1 g/l Rinderserumalbumin (BSA) bei pH 7 gemessen. Die Membranen wurden vor dem Beginn der Filtration für 4 h bei einem Druck von 0,4 MPa konditioniert.

Die Ergebnisse sind in Tabelle 2 angeführt.

**Tabelle 2**

| Membran | Permeabilität (I/m²hbar) | MWCO (g/mol) | Permeabilität nach Proteinfouling (%) |
|---|---|---|---|
| MEM-4 | 235 | 50000 | 50 |
| MEM-5 | 199 | 50000 | 98 |

## Patentansprüche

1. Membranen, bestehend aus mindestens einer Trägerschicht, auf der eine poröse Stützschicht, darauf mindestens eine trennaktive Schicht und darauf wiederum mindestens eine Deckschicht angeordnet sind, wobei die trennaktive Schicht aus mittels Grenzflächenpolymerisation aufgebrachten Polymeren oder aus dem Material der porösen Stützschicht besteht und integraler Bestandteil der porösen Stützschicht ist, und wobei das Material der trennaktiven Schicht funktionelle Gruppen aufweist, die in überwiegendem Maße Kohlenstoff-Kohlenstoff-Dreifachbindungen und/oder Kohlenstoff-Stickstoff-Dreifachbindungen aufweisen, und wobei das Material der Deckschicht funktionelle Gruppen aufweist, die in überwiegendem Maße mindestens Azid-Gruppen sind, und im Kontaktbereich von trennaktiver Schicht und Deckschicht die funktionellen Gruppen mit mindestens Kohlenstoff-Kohlenstoff-Dreifachbindungen und/oder Kohlenstoff-Stickstoff-Dreifachbindungen des Materials der trennaktiven Schicht mit den Azid-Gruppen des Materials der Deckschicht chemisch kovalent gekoppelt sind.

2. Membranen nach Anspruch 1, bei denen die Trägerschicht ein textiles Flächengebilde, vorteilhafterweise ein Vlies, ist.

3. Membranen nach Anspruch 1, bei denen das Material der porösen Stützschicht und/oder der trennaktiven Schicht Polysulfon oder Polyethersulfon oder Polyacrylnitril oder Polyvinylidenfluorid oder Polyester ist.

4. Membranen nach Anspruch 1, bei denen das Material der trennaktiven Schicht aus mittels Grenzflächenpolymerisation aufgebrachten Polymeren, wie vorteilhafterweise Polyamid, Polyester, Polyurethan, Polysulfonamid und/oder Polyharnstoff, besteht.

5. Membranen nach Anspruch 1, bei denen die Deckschicht aus einem hydrophilen multifunktionellen Material besteht, welche wasserlöslich und/oder alkohollöslich und/oder in einer Wasser-Alkohol-Mischung löslich und vorteilhafterweise hochverzweigt ist, und/oder wobei die Deckschicht aus Polyethylenimin und/oder Polypropylen und/oder Poly(amidamin) und/oder Polyamin und/oder Polyetherol und/oder Polyol und/oder Polysaccarid und/oder Chitosan und/oder Polyalkyloxazolin bestehen kann, und/oder wobei auch jedes Molekül des die Deckschicht bildenden Materials mindestens eine Azidgruppe enthalten kann.

6. Membranen nach Anspruch 1, bei denen die Konzentration der funktionellen Gruppen des Materials der trennaktiven Schicht zwischen 1 und 10 mol-% beträgt, wobei von diesen funktionellen Gruppen mindestens 75 bis 100 % funktionelle Gruppen mit mindestens Kohlenstoff-Kohlenstoff-Dreifachbindungen und/oder Kohlenstoff-Stickstoff-Dreifachbindungen sind, und wobei noch vorteilhafterweise die Konzentration der funktionellen Gruppen mit mindestens Kohlenstoff-Kohlenstoff-Dreifachbindungen und/oder Kohlenstoff-Stickstoff-Dreifachbindungen im Material der trennaktiven Schicht 75 bis 100 % der funktionellen Gruppen beträgt, und wobei auch vorteilhafterweise die funktionellen Gruppen mit mindestens Kohlenstoff-Kohlenstoff-Dreifachbindungen und/oder Kohlenstoff-Stickstoff-Dreifachbindungen Ethinyl- oder Nitrilgruppen sind.

7. Verfahren zur Herstellung von Membranen, bei dem auf eine Trägerschicht mindestens eine poröse Stützschicht aufgebracht wird, auf die nachfolgend mindestens eine trennaktive Schicht aufgebracht wird, die integraler Bestandteil der porösen Stützschicht ist, und darauf wiederum unmittelbar nachfolgend mindestens eine Deckschicht aufgebracht wird, wobei als Material der trennaktiven Schicht ein Material mit funktionellen Gruppen eingesetzt wird, oder funktionelle Gruppen in das Material der trennaktiven Schicht vor Aufbringen der Deckschicht einpolymerisiert werden, wobei die funktionellen Gruppen des Materials der trennaktiven Schicht in überwiegendem Maße Kohlenstoff-Kohlenstoff-Dreifachbindungen und/oder Kohlenstoff-Stickstoff-Dreifachbindungen aufweisen, und wobei das Material der Deckschicht funktionelle Gruppen aufweist, die in überwiegendem Maße mindestens Azid-Gruppen sind, und während und/oder nach dem Aufbringen der Deckschicht im Kontaktbereich von trennaktiver Schicht und Deckschicht die funktionellen Gruppen mit mindestens Kohlenstoff-Kohlenstoff-Dreifachbindungen und/oder Kohlenstoff-Stickstoff-Dreifachbindungen des Materials der trennaktiven Schicht mit den Azid-Gruppen des Materials der Deckschicht über eine 1,3-dipolare Cycloadditionsreaktion chemisch kovalent gekoppelt werden.

8. Verfahren nach Anspruch 7, bei dem als Material der porösen Stützschicht und/oder der trennaktiven Schicht Polysulfon oder Polyethersulfon oder Polyacrylnitril oder Polyvinylidenfluorid oder Polyester eingesetzt wird.

9. Verfahren nach Anspruch 7, bei dem die funktionellen Gruppen während der Herstellung des Materials der trennaktiven Schicht durch Verwendung funktioneller Gruppen enthaltender Monomere in das Material eingeführt werden.

10. Verfahren nach Anspruch 7, bei dem die Deckschicht, vorteilhafterweise unmittelbar nach der Grenzflächenpolymerisation der trennaktiven Schicht, in Form einer wässrigen Lösung und/oder einer alkoholischen Lösung und/oder einer Lösung in einer Wasser-Alkohol-Mischung der Materialien der Deckschicht durch ein Sprühverfahren oder durch ein Rakelverfahren oder durch ein Tauchverfahren auf die trennaktive Schicht aufgebracht wird, und/oder als Material der Deckschicht eine wässrige Lösung und/oder eine alkoholische Lösung und/oder eine Lösung in einer Wasser-Alkohol-Mischung des Deckschichtmaterials eingesetzt wird, bei denen jedes Molekül des die Deckschicht bildenden Materials mindestens eine Azidgruppe enthält.

11. Verfahren nach Anspruch 7, bei dem die trennaktive Schicht mittels Grenzflächenpolymerisation hergestellt wird, und/oder als Material der trennaktiven Schicht ein Material mit einer Konzentration der funktionellen Gruppen des zwischen 1 und 10 % eingesetzt wird, wobei von diesen funktionellen Gruppen mindestens 75 bis 100 % funktionelle Gruppen mit mindestens Kohlenstoff-Kohlenstoff-Dreifachbindungen und/oder Kohlenstoff-Stickstoff-Dreifachbindungen sind, und wobei noch vorteilhafterweise als Material der trennaktiven Schicht ein Material eingesetzt werden kann, bei dem die Konzentration der funktionellen Gruppen mit mindestens Kohlenstoff-Kohlenstoff-Dreifachbindungen und/oder Kohlenstoff-Stickstoff-Dreifachbindungen 75 bis 100 % der funktionellen Gruppen beträgt, und wobei auch vorteilhafterweise als Material der trennaktiven Schicht ein Material mit funktionellen Gruppen mit mindestens Kohlenstoff-Kohlenstoff-Dreifachbindungen und/oder Kohlenstoff-Stickstoff-Dreifachbindungen eingesetzt werden kann, wobei die funktionellen Gruppen Ethinyl- oder Nitrilgruppen sind.

12. Verfahren nach Anspruch 7, bei dem die chemisch kovalente Kopplung der funktionellen Gruppen mit mindestens Kohlenstoff-Kohlenstoff-Dreifachbindungen und/oder Kohlenstoff-Stickstoff-Dreifachbindungen des Materials der trennaktiven Schicht mit den Azid-Gruppen des Materials der Deckschicht über eine mittels Kupfer katalysierte 1,3-dipolare Cycloadditionsreaktion realisiert wird.

13. Verfahren nach Anspruch 7, bei dem mit dem Material der Deckschicht ein Katalysator, vorteilhafterweise ein Kupfer(I)salz, auf die trennaktive Schicht aufgebracht wird.

14. Verwendung von Membranen nach mindestens einem der Ansprüche 1 bis 6 und hergestellt nach mindestens einem der Ansprüche 7 bis 13 für die Aufbereitung wässriger Lösungen durch Umkehrosmose oder Mikro- oder Nano- oder Ultrafiltration.
